**Europäisches Patentamt**

**European Patent Office**

**Office européen des brevets**

(19)

(11) **EP 0 803 415 A2**

(12) **EUROPEAN PATENT APPLICATION**

(43) Date of publication:
29.10.1997 Bulletin 1997/44

(51) Int. Cl.$^6$: **B60T 1/00**

(21) Application number: 97105028.1

(22) Date of filing: 25.03.1997

(84) Designated Contracting States:
DE FR GB

(30) Priority: 25.04.1996 JP 105785/96

(71) Applicant:
TOYOTA JIDOSHA KABUSHIKı KAISHA
Aichi-ken (JP)

(72) Inventor: **Kubota, Kazuhiko**
**Toyota-shi, Aichi-ken (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(54) **Abnormality detecting device**

(57)     An abnormality detecting device detects without error whether each of a plurality of electric/electronic parts is in an abnormal state, regardless of fluctuations in a power source voltage. The fetching of drive voltages of N (e.g., N=6) solenoids in order is carried out M (e.g., M=2) times. A maximum value of minimum values of the drive voltages of the solenoids, among the drive voltages fetched M times for each solenoid, is computed and set as a reference voltage $V_{REF}$ for abnormality judgment. Maximum values of the drive voltages of the solenoids are computed and set as drive voltages $V_{SOLX}$ of the solenoids to be used for abnormality judgment. It is judged whether each of the solenoids is in an abnormal state, on the basis of the reference voltage $V_{REF}$ and the drive voltage $V_{SOLX}$ of each solenoid.

F I G. 1

**Description**

BACKGROUND OF THE INVENTION

Field of the Invention

The present invention relates to an abnormality detecting device, and in particular, to an abnormality detecting device which is ideal for detecting abnormal states of a plurality of electric/electronic parts installed in a vehicle.

Description of the Related Art

In recent years, the number of vehicles equipped with an anti-lock control device, which aims to prevent the wheels from locking and to shorten the braking distance when the vehicle brakes, has increased. The anti-lock control device fundamentally controls the braking torque applied to each wheel by the wheel cylinder of the braking device provided for each wheel, so that the difference between the speed of the vehicle body and the peripheral speed of the wheel does not become a greater than or equal to a predetermined value. The control of the braking torque is carried out by decreasing, increasing or maintaining the oil pressure of the brake fluid by a plurality of valves provided so as to correspond to the respective wheel cylinders.

The anti-lock control device includes a microprocessor which governs the various types of control. The usual structure is one in which a plurality of solenoids, which are provided so as to correspond to the respective valves, are turned on and off via switching elements by on and off signals outputted from the microprocessor, so as to drive the respective valves. In such a structure, a solenoid may not be able to be driven properly because for example, there may be a short in both ends of the exciting coil of the solenoid, or there may be an open failure or a short to the ground in the wire for driving the solenoid, or there may be a leak caused by a malfunction in the switching element for turning the solenoid on and off, or the like. (Hereinafter, such a state in which the solenoid cannot be driven properly is referred to as "an abnormal state".) It is desirable that an abnormal state is detected early and some type of countermeasure such as a fail-safe or the like is devised.

To this end, the inventors of the invention disclosed in the present application have proposed in Japanese Patent Application Laid-Open (JP-A) 7-261837 an abnormality detecting device. In the device, drive voltages of solenoids turned on and off by switching elements are fetched, a reference voltage is set on the basis of the levels of the drive voltages, and abnormalities are detected by comparing the levels of the drive voltages of the solenoids with the level of the reference voltage.

This publication JP-A 7-261837 discloses the following methods of setting the reference voltage. (1) The Nth drive voltage in descending order of the values of the drive voltages of the respective solenoids is set as the reference voltage. (2) The average value of the first and second drive voltages in descending order of the values of the drive voltages is set as the reference voltage. (3) The average value of the reference voltage set the previous time and the Nth drive voltage in descending order of the values of the drive voltages is set as the reference voltage. (4) The average value of the first and second drive voltages in descending order of the values of the drive voltages is computed, and this average value is averaged with the reference voltage set the previous time to obtain an average value which is used as the reference voltage. (5) The maximum value, excluding drive voltages greater than or equal to a threshold value, among differences between the drive voltages of the solenoids and their drive voltages the previous time as well as differences between the drive voltages of the solenoids and their drive voltages the time before last is set as the reference voltage. (6) The maximum value of the drive voltages of the solenoids, excluding those drive voltages of solenoids for which less than a predetermined period of time has passed since the solenoid was turned on or off, is set as the reference voltage.

The solenoids of the anti-lock control device are respectively connected to the battery of the vehicle which serves as a power source. Accordingly, the levels of the drive voltages of the respective solenoids depend on the voltage of the vehicle battery. However, many other power loads are connected to the vehicle battery in addition to the solenoids. The voltage of the vehicle battery fluctuates in accordance with the solenoids of the anti-lock control device being turned on and off as well as these other power loads being turned on and off. As a result, even if no abnormalities have occurred at the solenoids, the levels of the drive voltages of the solenoids fluctuate in accordance with the variations in the voltage of the battery which accompany the turning on and off of the solenoids and the turning on and off of other power loads. Therefore, even if no abnormality has occurred, an incorrect judgment may be made that an abnormality has occurred.

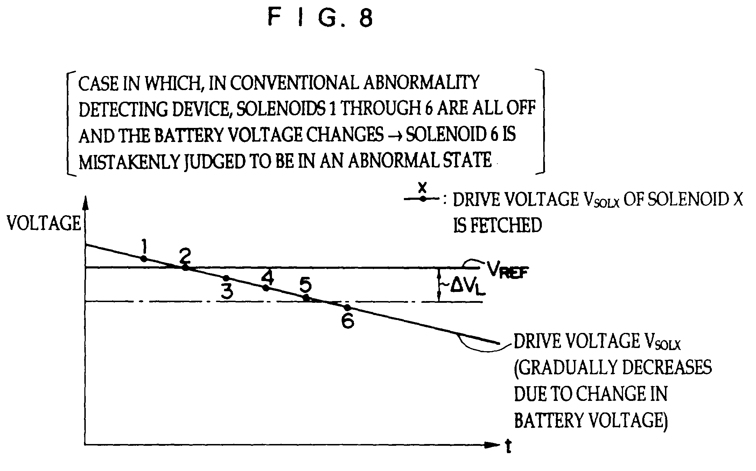

For example, in a case in which drive voltages $V_{SOLX}$ of six solenoids are fetched in order, the second value in descending order of the values of the drive voltages $V_{SOLX}$ of the solenoids is set as the reference voltage $V_{REF}$, and the drive voltage $V_{SOLX}$ of each solenoid is compared with a value equal to the reference voltage $V_{REF}$ minus a predetermined value $\Delta VL$ so as to determine whether there exists an abnormal state, when a monotonic decreasing fluctuation arises in the voltage of the vehicle battery and the drive voltages $V_{SOLX}$ monotonically decrease as shown in the example in Fig. 8, even if no abnormality has occurred and the six solenoids all remain in an off state, the solenoid drive voltage $V_{SOLX}$ (the drive voltage $V_{SOL6}$ of solenoid 6 in Fig. 8) which is fetched later in accordance with the timing will be smaller than ($V_{REF}$-$\Delta VL$). Accordingly, it will be incorrectly judged that an abnormality has occurred.

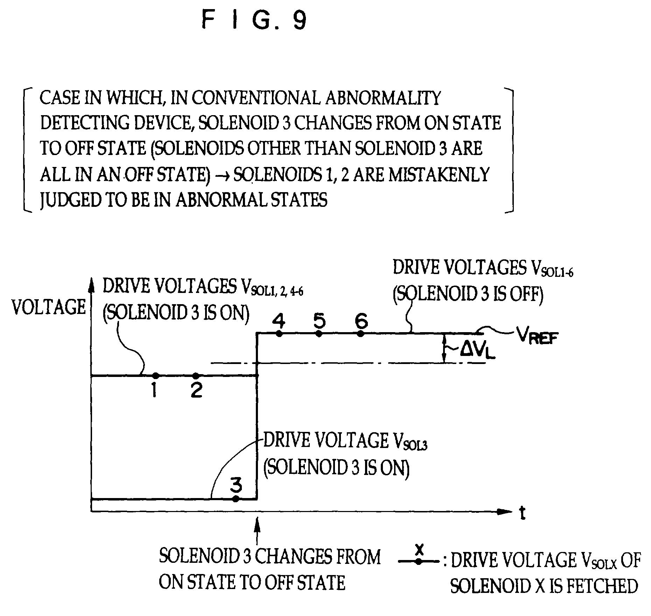

Further, in the example illustrated in Fig. 9, if solenoid 3 which is in an on state changes to an off state while the drive voltages $V_{SOLX}$ of the six solenoids are being fetched in order, the voltage of the battery fluctuates in a step-like manner as solenoid 3 is turned off. When the above-described methods of setting the reference voltage are applied in this case, it is incorrectly judged that an abnormality has occurred for the following reason. The values of the solenoid drive voltages $V_{SOLX}$ fetched after solenoid 3 has been turned off (i.e., the drive voltages of solenoids 4 through 6 in Fig. 9) increase in a step-like manner. Therefore, the value of the set reference voltage $V_{REF}$ increases. The solenoid drive voltages $V_{SOLX}$ detected before solenoid 3 was turned off (i.e., the drive voltages of solenoids 1 and 2) become smaller than ($V_{REF}$-$\Delta VL$).

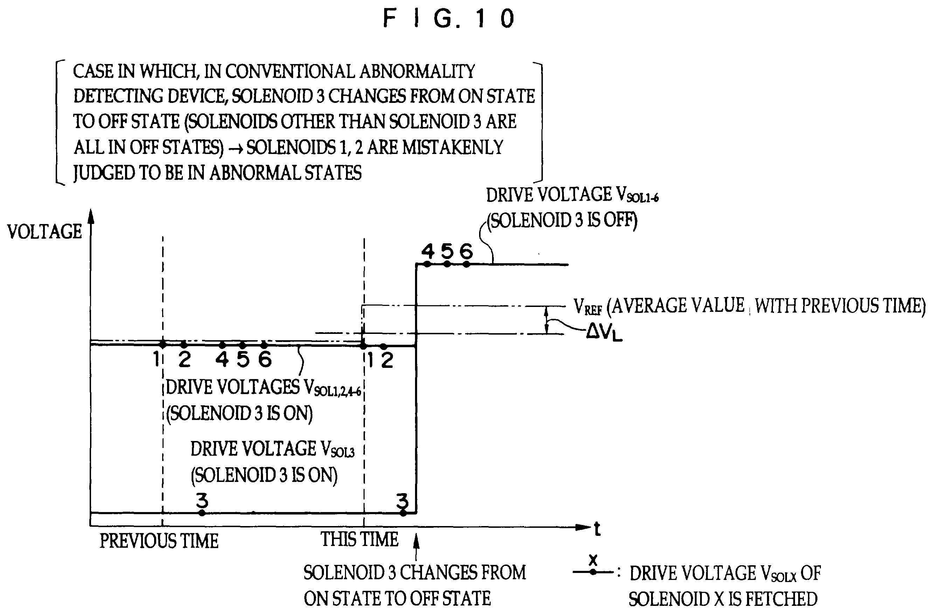

In a case in which the average value of the reference voltage set the previous time and the Nth drive voltage in descending order of the values of the drive voltages is set as the reference value $V_{REF}$ for this time, as shown in the example in Fig. 10, if the solenoid 3 which is on changes to an off state while the drive voltages $V_{SOLX}$ of the six solenoids are being fetched in order, the voltage of the battery changes in a step-like manner. The values of the solenoid drive voltages $V_{SOLX}$ fetched after the solenoid 3 is turned off (i.e., the values of the drive voltages of the solenoids 4 through 6 in Fig. 10) increase in a step-like manner. In this way, even though the reference voltage $V_{REF}$ is an average value obtained by using the reference voltage from the previous time, the value of the reference voltage $V_{REF}$ increases. The drive voltages $V_{SOLX}$ of the solenoids 1, 2 detected before the solenoid 3 was turned off become smaller than ($V_{REF}$-$\Delta VL$), and it is incorrectly judged that an abnormality has occurred.

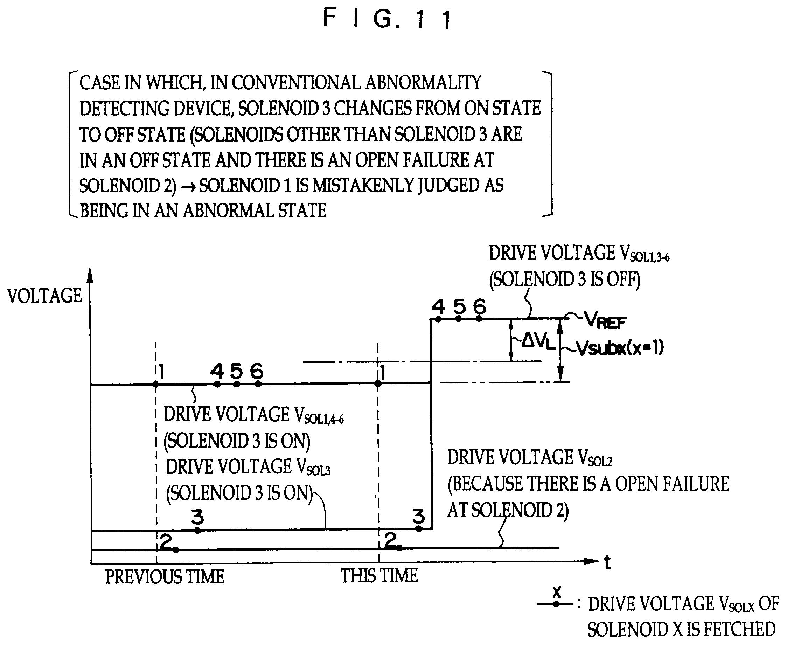

For the following reason, it is incorrectly judged that an abnormality has occurred also in a case in which the maximum value, excluding drive voltages greater than or equal to a threshold value K, among differences $V_{sub1}$ between the drive voltages of the solenoids and their drive voltages the previous time as well as differences $V_{sub\,2}$ between the drive voltages of the solenoids and their drive voltages the time before last is set as the reference voltage $V_{REF}$. As illustrated as an example in Fig. 11, when a monotonic decreasing fluctuation arises in the voltage of the battery and the drive voltages $V_{SOLX}$ monotonically decrease, if the threshold value K is relatively large, the drive voltage $V_{SOL1}$ of the solenoid 1 detected this time is set as the reference voltage $V_{REF}$. However, the solenoid drive voltages $V_{SOLX}$ fetched later in accordance with the timing (i.e., in Fig. 11, the drive voltages $V_{SOL5}$, $V_{SOL6}$ of the solenoids 5, 6) are smaller than ($V_{REF}$-$\Delta VL$), and it is incorrectly judged that an abnormality has occurred.

When the value of the threshold value K is lowered in order to prevent such an incorrect judgment, even if an open failure occurs at solenoid 2 as illustrated in Fig. 11, by setting the drive voltage $V_{SOL2}$ of solenoid 2 as the reference voltage $V_{REF}$, the abnormality of solenoid 2 cannot be detected.

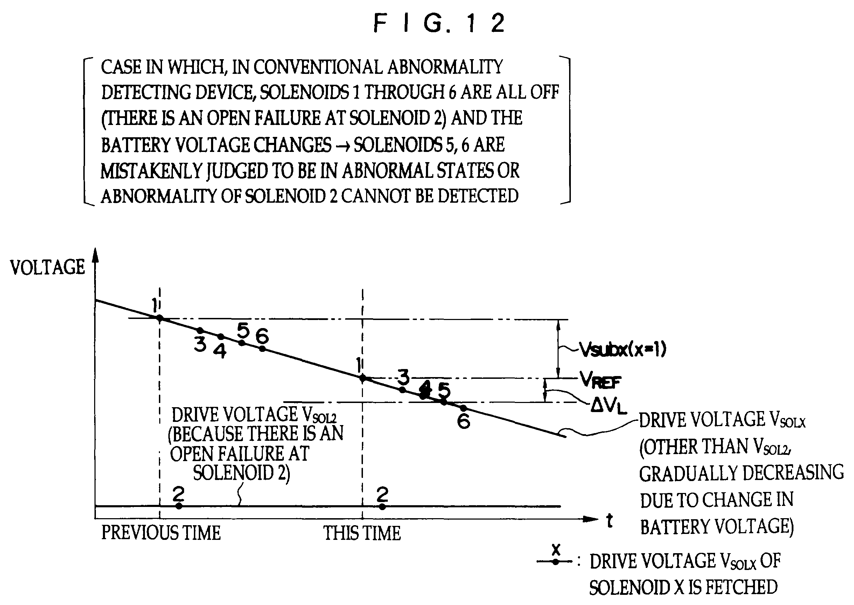

It is incorrectly judged that an abnormality has occurred also in a case in which the maximum value of the drive voltages of the solenoids, excluding the drive voltages of those solenoids for which less than a predetermined period of time has passed since the solenoid was turned on or off, is set as the reference voltage $V_{REF}$. As shown in Fig. 12, although adverse effects due to the surge voltage superimposed on the drive voltage $V_{SOL3}$ of solenoid 3 which has turned from on to off are eliminated, the voltage of the battery fluctuates in accordance with changes in the on/off state of solenoid 3. This fluctuation in the battery voltage due to changes in the on/off state of solenoid 3, as well the fact that the drive voltages of other solenoids are changing, are not taken into consideration. Therefore, as is clear from Fig. 12, it is incorrectly judged that an abnormality has occurred in the solenoid (solenoid 1 in Fig. 12).

SUMMARY OF THE INVENTION

In view of the aforementioned, an object of the present invention is to provide an abnormality detecting device which can, without error, detect abnormal states of a plurality of electric/electronic parts regardless of fluctuations in the voltage of a power source.

A first aspect of the present invention is an abnormality detecting device detecting abnormal states of a plurality of electric/electronic parts which are connected to a power source and switching means and which are driven and stopped being driven by drive voltages being turned on and off by the switching means being turned on and off, said abnormality detecting device comprising: detecting means for detecting a drive voltage of each electric/electronic part which are voltages between the switching means and each electric/electronic part, the drive voltage being detected a plurality of times for each electric/electronic part; reference value setting means for setting a reference value of drive voltages on the basis of the drive voltages of the electric/electronic parts detected by said detecting means; and judging means for judging whether each of the electric/electronic parts is in an abnormal state on the basis of the drive voltages used to set the reference value and on the basis of the reference value of the drive voltages which was set by said reference value setting means, and in a case in which the reference value of the drive voltages is set on the basis of drive voltages detected by said detecting means during a period of time when at least one of the switching means was on and on the basis of drive voltages detected by said detecting means during a period of time when said at least one of the switching means was off, said judging means excludes, from judgment as to whether each of the electric/electronic parts is in an abnormal state, drive voltages which were detected by said detecting means during the period of time that said at least one of the switching means was on.

In the invention of the first aspect, the drive voltages of each of the plurality of electric/electronic parts, which are the voltages between the plurality of electric/electronic parts and the switching means, are detected by the detecting means. On the basis of the respective drive voltages of the electric/electronic parts detected by the detecting means, a reference value of the drive voltages is set by the reference value setting means. The judging means judges whether each of the plurality of electric/electronic parts is in an abnormal state on the basis of the drive voltages used to set the reference value and on the basis of the reference value of the drive voltages set by the reference value setting means.

When the on/off state of at least one of the switching means changes, the voltage of the power source changes. The drive voltages of the electric/electronic parts other than the electric/electronic part connected to the switching means whose on/off state changed also vary (the value during the period when that switching means was off > the value during the period when that switching means was on), even in cases in which no abnormality has occurred. As a result, there is the possibility of an incorrect judgment that an abnormality has occurred in the electric/electronic parts in a case in which the reference value of the drive voltages is set on the basis of the drive voltages detected while that switching means was on and on the basis of the drive voltages detected while that switching means was off.

However, in the invention of the first aspect, in a case in which the reference value of the drive voltages is set on the basis of the drive voltages, which were detected by the detecting means during the time when at least one of the switching means was on, and the drive voltages, which were detected by the detecting means during the time when that switching means was off, the drive voltages which were detected by the detecting means during the time when that switching means was on (i.e., during the time when the drive voltages were relatively low values) are excluded from use in the judgment of the abnormal states. In this way, an incorrect judgment that an abnormality has occurred in an electric/electronic part although no abnormality has occurred, which incorrect judgment results from fluctuations in the voltage of the power source due to a change in the on/off state of at least one of the switching means, can be prevented.

In a case in which an abnormality such as an open failure or the like has occurred at any of the electric/electronic parts, even during the period of time when that switching means was in an off state (i.e., during the period of time that, if normal, the drive voltages would be relatively high), the abnormal state of an electric/electronic part at which an abnormality has occurred can reliably be detected due to the value of the drive voltage of that electric/electronic part remaining a value which allows a judgment that an abnormality has occurred. Accordingly, in accordance with the first aspect of the invention, abnormal states of a plurality of electric/electronic parts can be detected without error, regardless of fluctuations in the power source voltage which accompany changes in the on/off state of the switching means.

A second aspect of the present invention is an abnormality detecting device detecting abnormal states of a plurality of electric/electronic parts which are connected to a power source and switching means and which are driven and stopped being driven by drive voltages being turned on and off by the switching means being turned on and off, said abnormality detecting device comprising: detecting means for detecting a drive voltage of each electric/electronic part which are voltages between the switching means and each electric/electronic part, the drive voltage being detected a plurality of times for each electric/electronic part; reference value setting means for setting, as a reference value of the drive voltages, a maximum value of minimum values of the drive voltages of the electric/electronic parts among the drive voltages detected a plurality of times for each electric/electronic part by said detecting means; and judging means for judging whether each of the electric/electronic parts is in an abnormal state on the basis of the drive voltages detected a plurality of times for each electric/electronic part by said detecting means and on the basis of the reference value of the drive voltages which was set by said reference value setting means.

In the second aspect of the invention, the drive voltages of the plurality of electric/electronic parts, which are the voltages between the plurality of electric/electronic parts and the switching means, are detected a plurality of times by the detecting means. The reference value setting means sets, as the reference value of the drive voltages, the maximum value of the minimum values of the drive voltages of the electric/electronic parts among the drive voltages which have been detected by the detecting means a plurality of times for each electric/electronic part. The judging means judges whether the electric/electronic parts are in abnormal states on the basis of the drive voltages, which were detected a plurality of times for each electric/electronic part by the detecting means, and the reference value of the drive voltages, which was set by the reference value setting means.

In accordance with the above structure, for example, even if a fluctuation in the voltage of the power source occurs due to a change in the on/off state of a switching means or for some other reason during the period of time that the detecting means detects the drive voltages of the electric/electronic parts each a plurality of times, there is a high probability that a drive voltage, at a time when the power source voltage was relatively low during the aforementioned period of time, is set as the reference voltage of the drive voltages. Therefore, an incorrect judgment that an abnormality has occurred in an electric/electronic part in which no abnormality has occurred can be prevented.

In a case in which an abnormality such as an open failure or the like occurs in any of the electric/electronic parts, regardless of any fluctuations in the power source voltage, the abnormal state of the electric/electronic part can be reliably detected due to the drive voltage of the electric/electronic part remaining a value which allows a judgment that the abnormality has occurred. Accordingly, in accordance with the second aspect of the present invention, abnormal states of a plurality of electric/electronic parts can be detected without error regardless of fluctuations in the voltage of the power source due to changes in the on/off state of the switching means or some other reason.

A third aspect of the present invention is an abnormality detecting device detecting abnormal states of a plurality of electric/electronic parts which are connected to a power source and switching means and which are driven and stopped being driven by drive voltages being turned on and off by the switching means being turned on and off, said abnormality detecting device comprising: detecting means for detecting a drive voltage of each electric/electronic part which are voltages between the switching means and each electric/electronic part, the drive voltage being detected a plurality of times for each electric/electronic part; reference value setting means for setting, as a reference value of the drive voltages, a maximum value of minimum values of the drive voltages of the electric/electronic parts among the drive voltages detected a plurality of times for each electric/electronic part by said detecting means; and judging means for judging whether each of the electric/electronic parts is in an abnormal state on the basis of the maximum value of the drive voltages of the electric/electronic parts among the drive voltages detected a plurality of times for each electric/electronic part by said detecting means, and on the basis of the reference value of the drive voltages which was set by said reference value setting means.

In the third aspect of the present invention, in the same way as in the second aspect, the drive voltages of the plurality of electric/electronic parts, which are the voltages between the electric/electronic parts and the switching means, are each detected plural times by the detecting means. The reference value setting means sets, as the reference value of the drive voltages, the maximum value of the minimum values of the drive voltages of the electric/electronic parts among the drive voltages detected by the detecting means plural times for each of the plurality of electric/electronic parts. The judging means judges whether each of the electric/electronic parts is in an abnormal state on the basis of the maximum value of the drive voltages of the electric/electronic parts among the drive voltages detected plural times for each electric/electronic part by the detecting means, and on the basis of the reference value of the drive voltages set by the reference value setting means.

In accordance with the above structure, for example, in a case in which, during a period of time when the detecting means detects the drive voltage of each electric/electronic part plural times, a monotonically decreasing or monotonically increasing fluctuation is generated in the voltage of the power source due to a change in the on/off state of a switching means or for some other reason, a drive voltage at the time that the power source voltage was relatively low during the aforementioned period of time is set as the reference value of the drive voltages. Drive voltages at the time that the power source voltage was relatively high during the aforementioned period of time are used as the drive voltages of the electric/electronic parts which drive voltages are used in judging the abnormal states. Therefore, the drive voltages of electric/electronic parts in which no abnormality has occurred are definitely higher values than the reference value, and no incorrect judgment is made that an abnormality has occurred in an electric/electronic part in which no abnormality has occurred.

When the voltage of the power source fluctuates in a step-like manner due to a change in the on/off state of a switching means or for some other reason, because the reference value of the drive voltages is the maximum value of the minimum values of the drive voltages of the electric/electronic parts, due to the timing at which the power source voltage varies during a period of time in which the detecting means detects the drive voltage of each electric/electronic part plural times, there are cases in which a drive voltage at a time when the power source voltage was high during the aforementioned period of time is set, and there are cases in which a drive voltage at a time when the power source voltage was low during the aforementioned period of time is set. However, the drive voltages of the electric/electronic parts which are used in judging the abnormal states are the maximum values of the minimum values of the drive voltages for each electric/electronic part. Therefore, the drive voltage of an electric/electronic part at which no abnormality has occurred definitely is a value higher than the reference value. Even in cases in which the voltage of the power source varies in a step-like manner, it is not incorrectly judged that an abnormality has occurred in electric/electronic parts in which no abnormality has occurred.

When an abnormality such as an open failure or the like occurs in any of the electric/electronic parts, regardless of fluctuations in the power source voltage, the abnormal state of the electric/electronic part can reliably be detected by the drive voltage of the electric/electronic part remaining a value which allows a judgment that an abnormality has occurred. Accordingly, in accordance with the third aspect of the present invention, regardless of fluctuations in the power source voltage due to a change in the on/off state of a switching means or for some other reason, abnormal states of the plurality of electric/electronic parts can be detected even more reliably without error.

BRIEF DESCRIPTION OF THE DRAWINGS

Fig. 1 is a schematic structural view of a solenoid driving device relating to the present embodiment.

Fig. 2 is a schematic structural view of a braking device.

Fig. 3 is a flowchart illustrating abnormality monitoring processing which is implemented each time a predetermined period of time passes in the present embodiment.

Fig. 4 is a flowchart illustrating solenoid abnormality detection processing.

Fig. 5A is a diagram for explaining an abnormality of a solenoid which abnormality is detectable in the present

EP 0 803 415 A2

embodiment.

Fig. 5B is a graph illustrating changes in drive voltages in cases in which abnormalities are detected.

Fig. 6 is a graph illustrating an example of changes In drive voltages $V_X$ of the respective solenoids, and set values of a reference voltage $V_{REF}$ and a drive voltage $V_{SOLX}$, in a case in which voltage of a power source gradually decreases due to fluctuations in a power load other than the solenoids, or the like, in the present embodiment.

Fig. 7 is a graph illustrating an example of changes in drive voltages $V_X$ of the respective solenoids, and set values of a reference voltage $V_{REF}$ and a drive voltage $V_{SOLX}$, in a case in which voltage of a power source fluctuates due to a solenoid $SOL_3$ changing from an on state to an off state in the present embodiment.

Fig. 8 is a graph for explaining drawbacks of a conventional abnormality detecting device.

Fig. 9 is a graph for explaining drawbacks of a conventional abnormality detecting device.

Fig. 10 is a graph for explaining drawbacks of a conventional abnormality detecting device.

Fig. 11 is a graph for explaining drawbacks of a conventional abnormality detecting device.

Fig. 12 is a graph for explaining drawbacks of a conventional abnormality detecting device.

## DESCRIPTION OF THE PREFERRED EMBODIMENTS

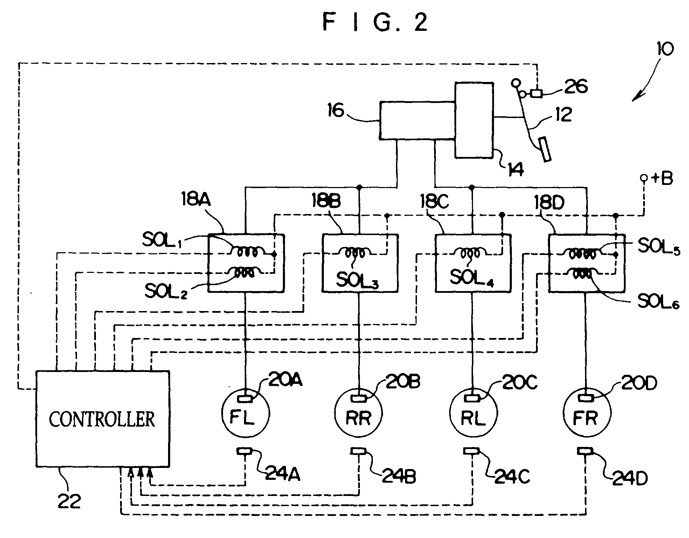

An example of an embodiment of the present invention will be described hereinafter with reference to the drawings. Fig. 2 illustrates a braking device 10 of a vehicle, which braking device 10 relates to the present embodiment and carries out so-called anti-lock control.

In Fig. 2, the tubes for guiding brake fluid, which serves as an operation fluid of the braking device 10, are represented by the solid lines, whereas various types of wiring are represented by the dashed lines. The braking device 10 is equipped with a brake pedal 12 which is disposed within the vehicle interior and is connected to a master cylinder 16 via a booster 14. In the present embodiment, a tandem-type master cylinder, in which two pressurized chambers are formed in series, is used as the master cylinder 16.

One of the two pressurized chambers of the master cylinder 16 is connected to a wheel cylinder 20A provided at the front left wheel of the vehicle and to a wheel cylinder 20B provided at the rear right wheel of the vehicle via pressure control devices 18A, 18B, respectively. The other of the two pressurized chambers of the master cylinder 16 is connected to a wheel cylinder 20C provided at the rear left wheel of the vehicle and to a wheel cylinder 20D provided at the front right wheel of the vehicle via pressure control devices 18C, 18D, respectively.

The pressure control device 18A includes solenoids $SOL_1$, $SOL_2$, the pressure control device 18B includes solenoid $SOL_3$, the pressure control device 18C includes solenoid $SOL_4$, and the pressure control device 18D Includes solenoids $SOL_5$, $SOL_6$. The solenoids $SOL_1$ through $SOL_6$ In Fig. 2 are illustrated typically as exciting coils. Ones of ends of the respective exciting coils of the solenoids $SOL_1$ through $SOL_6$ are connected to the plus terminal (denoted by +B in Fig. 2) of an unillustrated vehicle battery. The other ends are connected to a controller 22 (the connection to the controller 22 will be described in detail later), such that the solenoids $SOL_1$ through $SOL_6$ are turned on and off by the controller 22. Due to the solenoids SOL in the pressure control devices 18A through 18D being turned on and off, the pressures of the brake fluids within the wheel cylinders 20A through 20D are raised or lowered via unillustrated valves.

A rotating body (not shown), which rotates together with the wheel, is mounted to each of the four wheels of the vehicle. Wheel speed sensors 24A through 24D, which detect the peripheral speeds of the rotating bodies (the wheel speed $V_W$ is proportional to the peripheral speed of the rotating body), are provided in vicinities of the rotating bodies. The wheel speed sensors 24A through 24D are connected to the controller 22, and output their results of detection to the controller 22. A brake switch 26, which is turned on when the driver of the vehicle depresses the brake pedal 12, is connected to the controller 22.

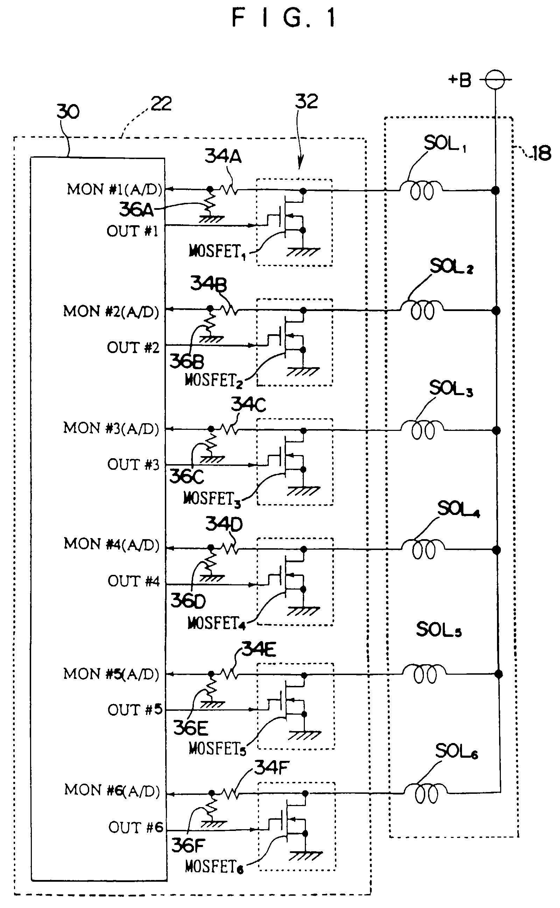

Fig. 1 illustrates a microprocessor 30 and a solenoid driving portion 32 which are portions of the controller 22. The other ends of the exciting coils of the solenoids $SOL_1$ through $SOL_6$ are connected to the drains of power $MOSFET_1$ through power $MOSFET_6$ (hereinafter, simply "MOSFETs") of the solenoid driving portion 32. $MOSFET_1$ through $MOSFET_6$ correspond to the switching means of the present invention. The gates thereof are connected to signal output ports OUT#1 through OUT#6, respectively, of the microprocessor 30, and the sources thereof are grounded.

Ones of ends of resistors 34A through 34F are connected between the solenoids $SOL_1$ through $SOL_6$ and the drains of $MOSFET_1$ through $MOSFET_6$, respectively. The other ends of the resistors 34A through 34F are connected to other ends of resistors 36A through 36F, whose one ends are respectively grounded. Further, A/D input ports MON#1 through MON#6 of the microprocessor 30 are connected between the resistors 34A through 34F and the resistors 36A through 36F, respectively. The electric potentials between the solenoids $SOL_1$ through $SOL_6$ and the sources of $MOSFET_1$ through $MOSFET_6$ (hereinafter, these electric potentials will be called the drive voltages of the respective solenoids) are divided by the respective resistors 34 and resistors 36, and the electric potentials are inputted to the microprocessor 30.

The resistors 34A through 34F function to limit the current inputted to the microprocessor 30. The respective electric resistances and voltage ratios of the resistors 34A through 34F and the resistors 36A through 36F are determined

6

such that A/D conversion can be carried out normally without the values after A/D conversion of the drive voltages becoming saturated, even in a case in which the voltage of the battery is at a maximum. Accordingly, if the solenoids $SOL_1$ through $SOL_6$ have the same structure, the values of the electric resistances of the resistors 34A through 34F and the resistors 36A through 36F are equal.

The microprocessor 30 includes A/D converters (unillustrated) which are provided so as to correspond respectively to the A/D input ports MON#1 through MON#6. The drive voltages inputted via the A/D input ports MON#1 through MON#6 are, by the A/D converters, converted into digital data expressing the levels of the respective drive voltages, and this digital data is fetched by the microprocessor 30.

Control processing of the brake pressure by the microprocessor 30 will be described hereinafter as operation of the present embodiment. When the microprocessor 30 detects that the brake switch 26 is on and braking is being carried out, each time a predetermined period of time passes, the wheel speeds $V_w$ detected by the wheel speed sensors 24A through 24D are fetched, the vehicle body speed $V_{GS}$ is estimated on the basis of the four wheel speeds $V_W$, and the $MOSFET_1$ through $MOSFET_6$ and the solenoids $SOL_1$ through $SOL_6$ are turned on and off by on and off signals outputted from the signal output ports OUT#1 through OUT#6 so that the difference between the wheel speed $V_W$ and the vehicle body speed $V_{GS}$ does not become greater than or equal to a predetermined value.

More specifically, when the brake pressure is decreased or increased, the microprocessor 30 determines the slope of the decrease or the increase, and determines the on/off duty ratio of each of the solenoids in accordance with the determined slope. Then, the microprocessor 30 outputs, via the signal output ports OUT#1 through OUT#6, on/off signals for turning the solenoids on and off at the determined duty ratios. The $MOSFET_1$ through $MOSFET_6$ are turned on only when the on/off signal outputted from the signal output ports OUT#1 through OUT#6 is high level. When a MOSFET is on, the exciting coil of the solenoid SOL connected to the MOSFET which is on is excited, and the valve switches over so that the pressure of the brake fluid in the wheel cylinder 20 (i.e., the brake pressure) increases or decreases.

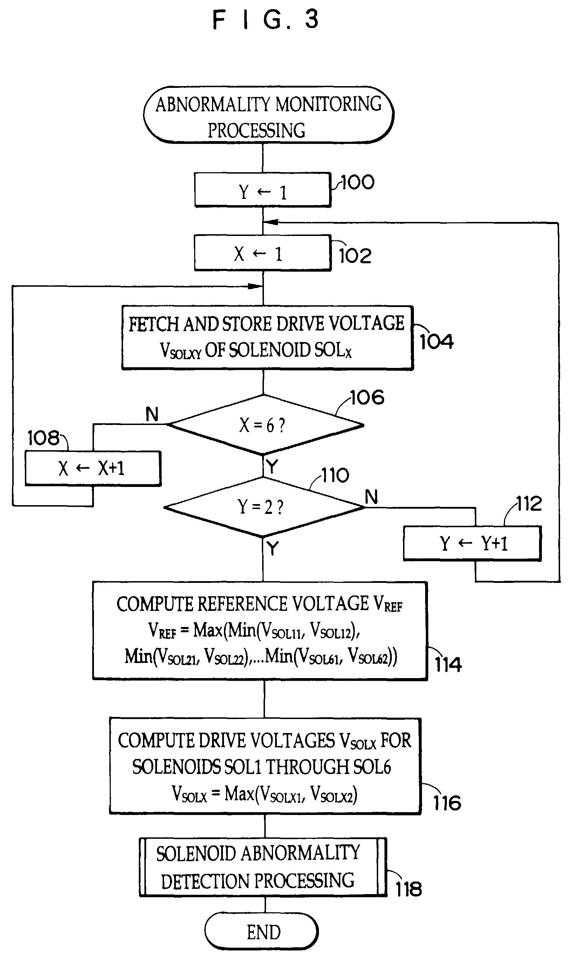

Next, explanation will be given of abnormality monitoring processing of the solenoids SOL by the microprocessor 30. At the microprocessor 30, in parallel with the above-described control of the brake pressure, the abnormality monitoring processing illustrated in the flowchart in Fig. 3 is implemented each time a predetermined period of time passes. In step 100, 1 is assigned to the counter Y, and in next step 102, 1 is assigned to the counter X.

In step 104, the drive voltage $V_X$ of the solenoid $SOL_X$ is fetched, and the fetched drive voltage $V_X$ is stored In a memory (not shown) as drive voltage $V_{SOLXY}$. Also in step 104, a judgment as to the on/off state of the $MOSFET_X$ connected to the solenoid $SOL_X$ is made on the basis of the level of the on/off signal supplied to the $MOSFET_X$, and the results of this judgment are stored in the memory in correspondence with the drive voltage $V_{SOLXY}$.

In step 106, a determination is made as to whether the value of the counter X matches the total number N of solenoids SOL (6 in the present embodiment). If the answer to this determination is negative, the routine proceeds to step 108 where the value of the counter X is increased by 1, and the routine returns to step 104. In this way, the processing of step 104 is repeated while the determination in step 106 is negative so that the drive voltages $V_X$ of all of the solenoids $SOL_1$ through $SOL_6$ are fetched in order and are stored in the memory as drive voltages $V_{SOL11}$ through $V_{SOL61}$ in correspondence with the on/off states of the $MOSFET_1$ through $MOSFET_6$.

When the answer to the determination in step 106 is affirmative, the routine proceeds to step 110 where a determination is made as to whether the value of the counter Y is equal to the number of times M (2 in the present embodiment) that the drive voltage $V_X$ of each solenoid is to be detected. If the answer to the determination is negative, the routine proceeds to step 112 where the value of the counter Y is increased by 1, and the routine returns to step 102.

Because 1 is assigned to the counter X in step 102 as described above, the processing of step 104 is repeated while the answer to the determination in step 106 is negative. The respective drive voltages $V_X$ of the solenoids $SOL_1$ through $SOL_6$ are fetched in order and are stored in the memory as drive voltages $V_{SOL12}$ through $V_{SOL62}$ in correspondence with the on/off states of the $MOSFET_1$ through $MOSFET_6$. Above steps 100 through 112 correspond to the detecting means of the present invention. When the answer to the determination in step 110 is affirmative, the routine proceeds to step 114 where the reference voltage $V_{REF}$ is computed in accordance with following formula (1).

$$V_{REF} = Max(Min(V_{SOL11}, V_{SOL12}), Min(V_{SOL21}, V_{SOL22}), ....Min(V_{SOL61}, V_{SOL62})) \qquad (1)$$

Max( ) is an operator expressing the selection of the maximum value within the parentheses ( ), and Min( ) is an operator expressing the selection of the minimum value within the parentheses ( ). The reference voltage $V_{REF}$ corresponds to the reference value of the drive voltages in the present invention, and step 114 corresponds to the reference value setting means of the present invention.

In step 116, the drive voltage $V_{SOLX}$ used in judging the abnormal state is computed for each of the solenoids $SOL_1$ through $SOL_6$ in accordance with following formula (2).

$$V_{SOLX} = Max(V_{SOLX1}, V_{SOLX2}) \qquad (2)$$

In step 118, solenoid abnormality detection processing is carried out. This solenoid abnormality detection process-

7

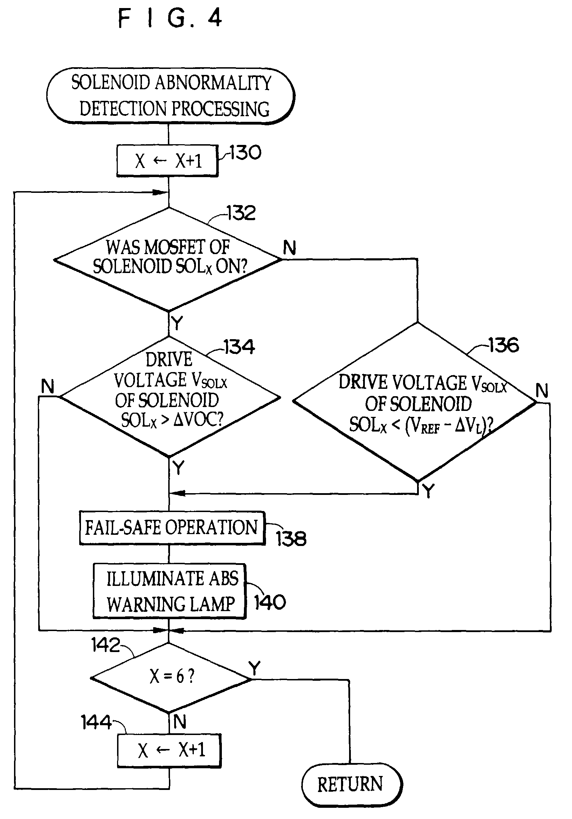

ing and the previous step 116 correspond to the judging means of the present invention. Hereinafter, solenoid abnormality detection processing will be described with reference to the flowchart in Fig. 4.

In step 130, the value of the counter X is set to 1. In subsequent step 132, a determination is made, on the basis of the information stored in the memory, whether the state of the $MOSFET_X$, at the time of fetching the drive voltage selected in step 116 as the drive voltage $V_{SOLX}$ from among the drive voltages $V_{SOLX1}$, $V_{SOLX2}$ of the solenoid $SOL_X$, was an on state. If the answer to the determination in step 132 is affirmative, in step 134, a determination is made as to whether the drive voltage $V_{SOLX}$ is greater than a predetermined value $\Delta VOC$ which is a threshold value for detecting an abnormality at the time the MOSFET is on. If the answer to the determination in step 132 is negative, In step 136, a determination is made as to whether the drive voltage $V_{SOLX}$ is less than a value equal to the reference voltage $V_{REF}$ minus a predetermined value $\Delta VL$ which is the threshold value for detecting an abnormality at the time the MOSFET is off.

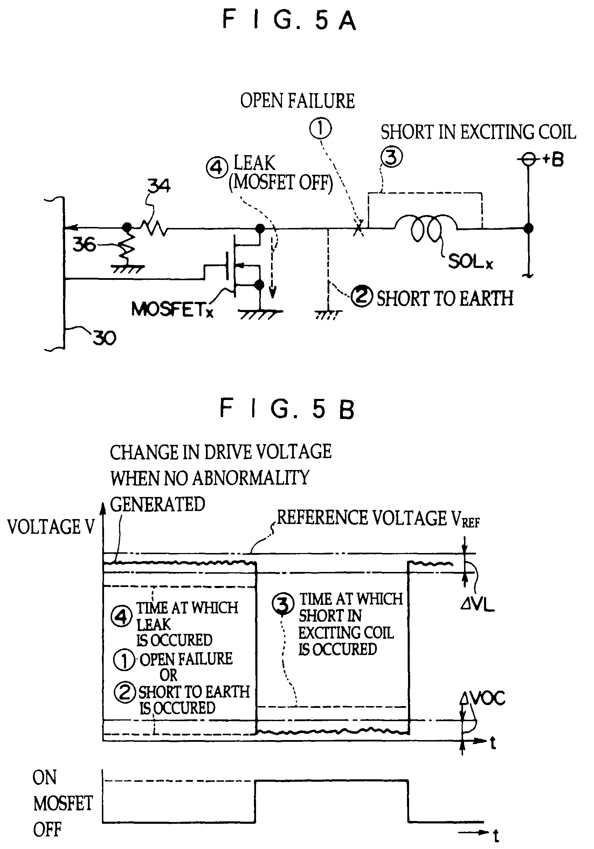

As illustrated in Fig. 5A, in a case in which the solenoid SOL is in a normal state, the drive voltage of the solenoid SOL changes to a level which is slightly lower than the power source voltage (reference voltage $V_{REF}$) when the MOSFET is off, and changes to a level which is slightly higher than 0 when the MOSFET is on. (Fig. 5A illustrates a case in which the voltage of the battery is constant.)

However, in a case in which an open failure in the wiring connected to the solenoid SOL occurs as shown by ① in Fig. 5A or a short to the earth is generated in the wiring as shown by ② in Fig. 5A, as illustrated in Fig. 5B, the level of the drive voltage $V_X$ when the MOSFET is off is nearly zero. Accordingly, such abnormalities are detected by an affirmative answer to the determination in step 136.

Further, as shown by ③ in Fig. 5A, when both ends of the exciting coil of the solenoid SOL have shorted, the level of the drive voltage $V_X$ at the time that the MOSFET is on increases by a predetermined value or more over the level at normal times. Accordingly, this abnormality is detected by an affirmative determination in step 134. Further, as shown by ④ in Fig. 5A, when the MOSFET is out of order and a leak (leaking current) occurs regardless of the on/off state of the MOSFET, the level of the drive voltage $V_X$ at the time the MOSFET is off drops by a predetermined value or more below the level at a normal time. Accordingly, this abnormality can be detected by an affirmative determination in step 136.

The leak may be of such an extent that the solenoid SOL may operate incorrectly due to the leaking current. $\Delta VL$ is set such that (the reference voltage $V_{REF}$ - $\Delta VL$) is a value which is higher than the level of the drive voltage inputted to the A/D input port MON when such a leak occurs and the MOSFET is off, and which is lower than the level of the drive voltage Inputted to the A/D input port MON during a normal state and with the MOSFET off. Further, $\Delta VOC$ is set to a value which is lower than the level of the drive voltage inputted at the time the exciting coil shorts and the MOSFET is on, and which is higher than the level of the drive voltage inputted during a normal state and with the MOSFET on.

In the present embodiment, if the answer to the determination in step 134 or step 136 is affirmative, it can be judged that there is an abnormal state in which at least one of the abnormalities illustrated by ① through ④ in Fig. 5A has occurred. Therefore, in step 138, for example, the anti-lock control is stopped, and a fail-safe operation is carried out such as control of one portion of the anti-lock control is switched or the like. In step 140, an unillustrated ABS warning lamp provided on the instrument panel of the vehicle is lit so as to inform the driver that an abnormality has occurred, and the routine proceeds to step 142. In place of illuminating an ABS warning lamp, for example, the ABS warning lamp may flash on-and-off, or the brightness thereof may increase or decrease, or the color thereof may change or the like. Further, when the answer to the determination in step 134 or step 136 is negative, it is determined that the solenoid $SOL_X$ is functioning normally, and the routine proceeds to step 142 without any measures being taken.

In step 142, a determination is made as to whether the counter X is 6. If the answer to the determination in step 142 is negative, in step 144, the counter X is increased by 1, and the routine returns to step 132 where a different solenoid SOL becomes the subject of abnormality detection, and the same processings are carried out. Steps 132 through 144 are repeated until the determination in step 142 is affirmative, so that abnormality detection is carried out for all of the solenoids $SOL_1$ through $SOL_6$.

In this way, in the present embodiment, without monitoring the voltage of the battery which is the power source, the drive voltage of one of the solenoids $SOL_1$ through $SOL_6$ is used as the reference voltage $V_{REF}$ and for each of the solenoids $SOL_1$ through $SOL_6$, a judgment is made as to whether the solenoid is in an abnormal state by using this reference voltage $V_{REF}$ Therefore, abnormal states of the solenoids $SOL_1$ through $SOL_6$ can reliably be detected, and the number of necessary A/D input ports of the microprocessor 30 can be reduced.

Further, in the present embodiment, the reference voltage $V_{REF}$ is computed in accordance with formula (1), and the drive voltages $V_{SOLX}$ used to judge the abnormal states of the solenoids $SOL_1$ through $SOL_6$ are computed in accordance with formula (2). Therefore, even if the voltage of the battery fluctuates while the drive voltages $V_X$ of the solenoids $SOL_1$ through $SOL_6$ are each being fetched M times (M=2 in the present embodiment) in steps 102 through 110, an incorrect determination of an abnormality of the solenoids $SOL_1$ through $SOL_6$ can be prevented.

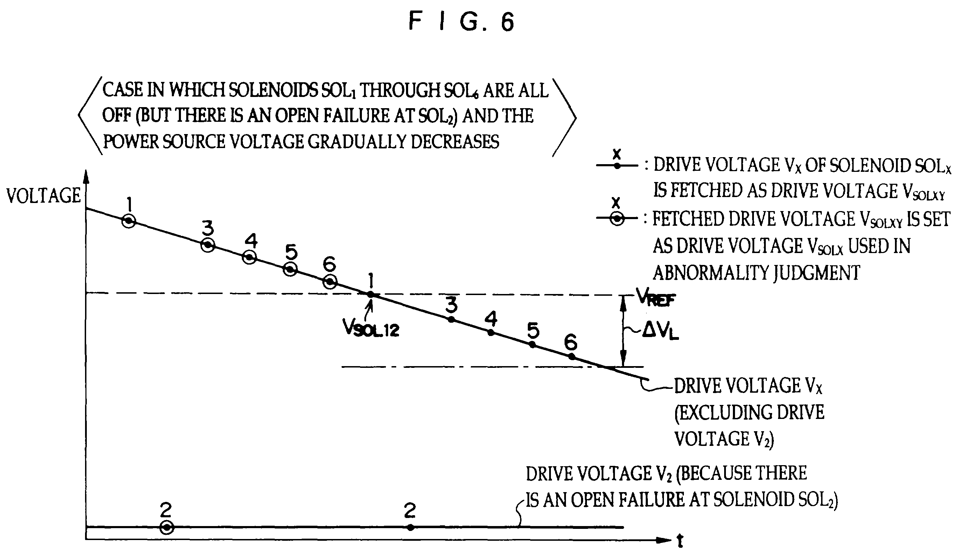

As an example, the case illustrated in Fig. 6 will be considered in which the voltage of the battery gradually decreases due to a fluctuation in a power load connected to the battery other than the solenoids $SOL_1$ through $SOL_6$ or due to a change in the surrounding environment or the like. Accordingly, as illustrated in Fig. 6, while the drive voltages $V_X$ of the solenoids $SOL_1$ through $SOL_6$ are each being fetched M times, the drive voltages $V_X$ of solenoid $SOL_1$ and solenoids $SOL_3$ through $SOL_6$ gradually decrease. (In Fig. 6, the solenoids $SOL_1$ through $SOL_6$ are all off, and an open failure has occurred at solenoid $SOL_2$.)

As illustrated in the example in Fig. 6, the drive voltages $V_X$ of the solenoids $SOL_1$ through $SOL_6$ are fetched as the drive voltages $V_{SOLXY}$ at the timing represented by the dots plotted on the straight line illustrating the change in drive voltage $V_X$ (or $V_2$) in Fig. 6. The drive voltage $V_{SOL12}$ fetched the second time for the solenoid $SOL_1$ is set as the reference voltage $V_{REF}$ in accordance with formula (1). On the other hand, the drive voltages $V_{SOLXY}$, which are fetched at the timing represented by those dots which are encircled among the plotted dots, are set in accordance with formula (2) as the drive voltages $V_{SOLX}$ used in the judgment of abnormalities of the solenoids $SOL_1$ through $SOL_6$.

In Fig. 6, as is clear from comparing a value (shown by the one-dot chain line), which is equal to the reference voltage $V_{REF}$ minus the threshold value $\Delta VL$, with each of the drive voltages $V_{SOLX}$ of the solenoids $SOL_1$ through $SOL_6$, the values of the drive voltages $V_{SOLX}$ of the solenoids $SOL_1$ and $SOL_3$ through $SOL_6$ at which there are no abnormalities are greater than the value equal to the reference voltage $V_{REF}$ minus the threshold value $\Delta VL$. Therefore, for the solenoids $SOL_1$ and $SOL_3$ through $SOL_6$, it is not judged that an abnormality has occurred, regardless of fluctuations in the voltage of the battery. However, for solenoid $SOL_2$ at which the fault has occurred, the value of the drive voltage $V_{SOL2}$ is smaller than the value equal to the reference voltage $V_{REF}$ minus the threshold value $\Delta VL$. Therefore, the abnormal state, such as an open failure or the like, can be detected reliably.

This is the same in a case in which the voltage of the battery gradually increases and the drive voltages $V_X$ of the respective solenoids $SOL_1$ through $SOL_6$ gradually increase while the drive voltages $V_X$ of the solenoids $SOL_1$ through $SOL_6$ are each fetched M times.

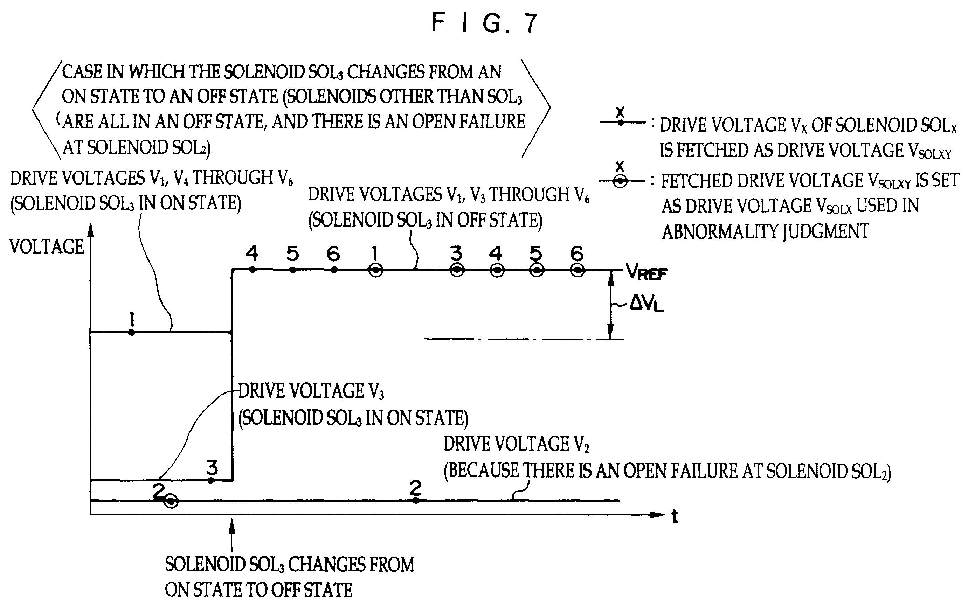

Next, the following case illustrated as an example in Fig. 7 will be considered. While the drive voltages $V_X$ of the solenoids $SOL_1$ through $SOL_6$ are each fetched M times, the solenoid $SOL_3$ is changed from an on state to an off state. Therefore, the voltage of the battery fluctuates, and the drive voltages $V_1$ and $V_4$ through $V_6$ become large. (In Fig. 7, the solenoids other than $SOL_3$, i.e., solenoids $SOL_1$, $SOL_2$, and $SOL_4$ through $SOL_6$, are off and an open failure has occurred at the solenoid $SOL_2$.)

In the example of Fig. 7 as well, the drive voltages $V_X$ of the solenoids $SOL_1$ through $SOL_6$ are fetched as the drive voltages $V_{SOLXY}$ at the timing represented by the dots plotted on the straight line showing the changes in the drive voltage $V_X$ in Fig. 7. One of the drive voltages $V_{SOL41}$, $V_{SOL42}$, $V_{SOL51}$, $V_{SOL52}$, $V_{SOL61}$, $V_{SOL62}$ fetched for the solenoids $SOL_4$ through $SOL_6$ and the drive voltages $V_{SOL12}$, $V_{SOL32}$ fetched the second time for the solenoids $SOL_1$, $SOL_3$ is set as the reference voltage $V_{REF}$ in accordance with formula (1).

The drive voltages $V_{SOLXY}$ fetched at the timing represented by the encircled dots among the aforementioned plotted dots (i.e., the drive voltages $V_{SOLXY}$ fetched during the period of time that the solenoid $SOL_3$ was off) are, in accordance with formula (2), set as the drive voltages $V_{SOLX}$ used for judging abnormalities of the solenoids $SOL_1$ through $SOL_6$.

In Fig. 7 as well, as is clear from comparing a value equal to the reference voltage $V_{REF}$ minus a predetermined value $\Delta VL$ with each of the drive voltages $V_{SOLX}$ of the solenoids $SOL_1$ through $SOL_6$, the values of the drive voltages $V_{SOLX}$ of the solenoids $SOL_1$ and $SOL_3$ through $SOL_6$ at which there are no abnormalities are greater than the value equal to the reference voltage $V_{REF}$ minus the predetermined value $\Delta VL$. Therefore, for the solenoids $SOL_1$ and $SOL_3$ through $SOL_6$, it is not judged that an abnormality has occurred, regardless of fluctuations in the voltage of the battery. However, for solenoid $SOL_2$ at which the fault has occurred, the value of the drive voltage $V_{SOL2}$ is smaller than the value equal to the reference voltage $V_{REF}$ minus the threshold value $\Delta VL$. Therefore, the abnormal state, such as an open failure or the like, can be detected reliably.

This is the same in a case in which, while the drive voltages $V_X$ of the solenoids $SOL_1$ through $SOL_6$ are each being fetched M times, solenoid $SOL_3$ or another solenoid is turned from on to off at a timing different from the timing shown in Fig. 7, or a case in which while the drive voltages $V_X$ of the solenoids $SOL_1$ through $SOL_6$ are each being fetched M times, one of the solenoids is turned from off to on.

In this way, in the present embodiment, even if the voltage of the battery fluctuates due to a change in the on/off state of a solenoid SOL or for some other reason, an incorrect judgment that an abnormality has occurred at a solenoid at which no abnormality has occurred can be prevented, and for solenoids at which an abnormality such as an open failure or the like has occurred, such can be reliably detected as an abnormality. When the voltage of the battery fluctuates, it may be difficult to detect all of the abnormalities shown by ① through ④ in Fig. 5A. However, in a steady state in which there are no fluctuations in the voltage of the battery, all of the abnormalities ① through ④ in Fig. 5A can be detected reliably.

In the above description, the drive voltage of each of the solenoids is fetched twice, and a judgment is made as to whether an abnormality has occurred. However, the present invention is not limited to the same, and for example, judgment as to whether an abnormality has occurred can be made on the basis of the results of fetching the drive voltage of each solenoid three or more times.

In the above description, by, in accordance with formula (2), computing and setting the respective solenoid drive voltages $V_{SOLX}$ used in detecting abnormal states, in a case in which the on/off state of any of the $MOSFET_1$ through

MOSFET$_6$ changes, the drive voltages $V_{SOLXY}$ which were fetched during the period that the MOSFET whose on/off state changed was on are not used in the judgment of the abnormal states. However, the first aspect of the present invention is not limited to the above-described embodiment, and the following structure is possible for example. In a case in which it is monitored whether the on/off state of each solenoid changed during the period of time that the drive voltages of the solenoids were each fetched M times, and it is detected that the on/off state of any of the solenoids has changed, it is determined whether the change was a change to an on state or a change to an off state. In accordance with the results of this determination, judgment of abnormal states is carried out without using the drive voltages fetched before the change in the on/off state was detected or the drive voltages fetched after the change in the on/off state was detected. Further, for solenoids whose on/off state has changed, it suffices to not carry out a judgment as to the abnormal state during this cycle.

Although solenoids of an anti-lock control device are used as an example of the electric/electronic parts in the above description, the present invention is not limited to the same. The present invention is particularly effective in cases, such as that of a battery or the like, in which the power source voltage is unstable and the drive voltages fluctuate. It is preferable to apply the present invention to the detection of abnormal states of electric/electronic parts of which a plurality of the same type are provided within a vehicle, such as, for example, solenoids which drive various valves provided in the vehicle, hydraulic pumps of an active suspension, or the like. Further, the present invention is not limited to the detection of abnormal states of electric/electronic parts used in a vehicle. For example, the invention may be applied to the detection of abnormal states of a plurality of lamps which are turned on and off by respective switches, or the like.

In the above description, when an abnormal state of a solenoid is detected, the ABS warning lamp is lit. However, information which specifies the solenoid at which the abnormal state has been detected may be displayed, or the type of abnormality which has occurred may be determined and displayed. Further, a different fail-safe processing may be carried out in accordance with the determined abnormality.

Although power MOSFETs are used as the switching means in the above description, the present invention is not limited to the same. For example, relays or switching means such as transistors, FETs or the like, or switches which are turned on and off manually may be used as the switching means.

Further, in the above description, the turning on and off of the MOSFETs and the detection of abnormal states of the solenoids are carried out by a single microprocessor 30. However, the present invention is not limited to the same, and a control circuit such as a plurality of different microprocessors can be used. In this case, if on/off signals for turning the switching means on and off are inputted to the microprocessors which effect detection of abnormal states of the solenoids, the states of the on/off signals can be judged.

Although an example in which the present invention is applied to the solenoids of a braking device which effects anti-lock control has been described herein, the present invention is not limited to the same. The present invention is also applicable to a braking device which effects slip control such as acceleration slip control which controls the braking torque applied to the driving wheels such that the slip amount of the driving wheels at the time the vehicle accelerates is of an appropriate magnitude.

In the above description, ones of ends of the exciting coils of the solenoids SOL serving as the electric/electronic parts are connected to the power source, whereas the other ends are grounded via the MOSFETs which serve as the switching means. The voltage between the electric/electronic part and the switching means, i.e., the voltage at the terminal at the grounded side of the electric/electronic part, is the drive voltage. However, the present invention is not limited to the same. Among the terminal of the electric/electronic part connected to the power source side and the terminal thereof connected to the ground side, the drive voltage of the electric/electronic part is the electric potential (voltage) at the terminal at the side turned on and off by the switching means being turned on and off (i.e., the side at which the electric potential varies). Accordingly, in a case in which one end of the electric/electronic part is connected to the power source via the switching means whereas the other end is grounded, the voltage between the electric/electronic part and the switching means, i.e., the voltage of the terminal at the power source side of the electric/electronic part, may be used as the drive voltage of the electric/electronic part.

In accordance with the first aspect of the invention, when the reference value of the drive voltages is set on the basis of the drive voltages, which were detected during the period of time that at least one of the switching means was on, and on the basis of the drive voltages, which were detected during the period of time that that switching means was off, the drive voltages which were detected during the period of time when that switching means was on are excluded from use in the judgment of abnormal states of the electric/electronic parts. Therefore, regardless of the fluctuations in the power source voltage which accompany changes in the on/off states of the switching means, abnormal states of a plurality of electric/electronic parts can be detected without error.

In the second aspect of the present invention, among the drive voltages detected plural times for each of the electric/electronic parts, the maximum value of the minimum values of the drive voltages of the respective electric/electronic parts is set as the reference value of the drive voltages. Abnormal states of the electric/electronic parts are judged on the basis of the drive voltages which were detected plural times for each electric/electronic part and on the basis of the reference value of the drive voltages. Therefore, regardless of fluctuations in the voltage of the power source which are caused by changes in the on/off states of the switching means or some other reason, abnormal states of the plurality of electric/electronic parts can reliably be detected without error.

In the third aspect of the present invention, among the drive voltages detected a plurality of times for each of the electric/electronic parts, the maximum value of the minimum values of the drive voltages of the respective electric/electronic parts is set as the reference value of the drive voltages. Abnormal states of the electric/electronic parts are judged on the basis of the maximum value of the drive voltages of the electric/electronic parts among the drive voltages which were detected a plurality of times for each of the electric/electronic parts, and on the basis of the reference value of the drive voltages. Therefore, regardless of fluctuations in the power source voltage caused by changes in the on/off states of the switching means or caused by some other reason, abnormal states of the plurality of electric/electronic parts can be detected even more reliably and without error.

An abnormality detecting device detects without error whether each of a plurality of electric/electronic parts is in an abnormal state, regardless of fluctuations in a power source voltage. The fetching of drive voltages of N (e.g., N=6) solenoids in order is carried out M (e.g., M=2) times. A maximum value of minimum values of the drive voltages of the solenoids, among the drive voltages fetched M times for each solenoid, is computed and set as a reference voltage $V_{REF}$ for abnormality judgment. Maximum values of the drive voltages of the solenoids are computed and set as drive voltages $V_{SOLX}$ of the solenoids to be used for abnormality judgment. It is judged whether each of the solenoids is in an abnormal state, on the basis of the reference voltage $V_{REF}$ and the drive voltage $V_{SOLX}$ of each solenoid.

## Claims

1. An abnormality detecting device detecting abnormal states of a plurality of electric/electronic parts which are connected to a power source and switching means and which are driven and stopped being driven by drive voltages being turned on and off by the switching means being turned on and off, said abnormality detecting device comprising:

   detecting means for detecting a drive voltage of each electric/electronic part which are voltages between the switching means and each electric/electronic part, the drive voltage being detected a plurality of times for each electric/electronic part;
   reference value setting means for setting a reference value of drive voltages on the basis of the drive voltages of the electric/electronic parts detected by said detecting means; and
   judging means for judging whether each of the electric/electronic parts is in an abnormal state on the basis of the drive voltages used to set the reference value and on the basis of the reference value of the drive voltages which was set by said reference value setting means, and in a case in which the reference value of the drive voltages is set on the basis of drive voltages detected by said detecting means during a period of time when at least one of the switching means was on and on the basis of drive voltages detected by said detecting means during a period of time when said at least one of the switching means was off, said judging means excludes, from judgment as to whether each of the electric/electronic parts is in an abnormal state, drive voltages which were detected by said detecting means during the period of time that said at least one of the switching means was on.

2. An abnormality detecting device detecting abnormal states of a plurality of electric/electronic parts which are connected to a power source and switching means and which are driven and stopped being driven by drive voltages being turned on and off by the switching means being turned on and off, said abnormality detecting device comprising:

   detecting means for detecting a drive voltage of each electric/electronic part which are voltages between the switching means and each electric/electronic part, the drive voltage being detected a plurality of times for each electric/electronic part;
   reference value setting means for setting, as a reference value of the drive voltages, a maximum value of minimum values of the drive voltages of the electric/electronic parts among the drive voltages detected a plurality of times for each electric/electronic part by said detecting means; and
   judging means for judging whether each of the electric/electronic parts is in an abnormal state on the basis of the drive voltages detected a plurality of times for each electric/electronic part by said detecting means and on the basis of the reference value of the drive voltages which was set by said reference value setting means.

3. An abnormality detecting device detecting abnormal states of a plurality of electric/electronic parts which are connected to a power source and switching means and which are driven and stopped being driven by drive voltages being turned on and off by the switching means being turned on and off, said abnormality detecting device comprising:

detecting means for detecting a drive voltage of each electric/electronic part which are voltages between the switching means and each electric/electronic part, the drive voltage being detected a plurality of times for each electric/electronic part;

reference value setting means for setting, as a reference value of the drive voltages, a maximum value of minimum values of the drive voltages of the electric/electronic parts among the drive voltages detected a plurality of times for each electric/electronic part by said detecting means; and

judging means for judging whether each of the electric/electronic parts is in an abnormal state on the basis of the maximum value of the drive voltages of the electric/electronic parts among the drive voltages detected a plurality of times for each electric/electronic part by said detecting means, and on the basis of the reference value of the drive voltages which was set by said reference value setting means.

# F I G . 1

F I G. 2

# F I G . 3

ABNORMALITY MONITORING PROCESSING

$Y \leftarrow 1$ — 100

$X \leftarrow 1$ — 102

FETCH AND STORE DRIVE VOLTAGE $V_{SOLXY}$ OF SOLENOID $SOL_X$ — 104

106 — $X = 6$ ?

N

108 — $X \leftarrow X+1$

Y

110 — $Y = 2$ ?

N — 112 — $Y \leftarrow Y+1$

Y

COMPUTE REFERENCE VOLTAGE $V_{REF}$
$V_{REF} = Max(Min(V_{SOL11}, V_{SOL12}),$
$Min(V_{SOL21}, V_{SOL22}),...Min(V_{SOL61}, V_{SOL62}))$ — 114

COMPUTE DRIVE VOLTAGES $V_{SOLX}$ FOR SOLENOIDS SOL1 THROUGH SOL6
$V_{SOLX} = Max(V_{SOLX1}, V_{SOLX2})$ — 116

SOLENOID ABNORMALITY DETECTION PROCESSING — 118

END

EP 0 803 415 A2

# F I G. 4

SOLENOID ABNORMALITY
DETECTION PROCESSING

$X \leftarrow X+1$ —130

WAS MOSFET OF
SOLENOID $SOL_X$ ON? —132  N

Y

DRIVE
VOLTAGE $V_{SOLX}$ —134
OF SOLENOID
$SOL_X > \Delta VOC$?  N

DRIVE VOLTAGE $V_{SOLX}$ —136
OF SOLENOID
$SOL_X < (V_{REF} - \Delta V_L)$?  N

Y

Y

FAIL-SAFE OPERATION —138

ILLUMINATE ABS
WARNING LAMP —140

142— $X = 6$?  Y

N

144— $X \leftarrow X+1$

RETURN

16

# F I G. 5 A

# F I G. 5 B

# F I G. 6

CASE IN WHICH SOLENOIDS $SOL_1$ THROUGH $SOL_6$ ARE ALL OFF (BUT THERE IS AN OPEN FAILURE AT $SOL_2$) AND THE POWER SOURCE VOLTAGE GRADUALLY DECREASES

—•— : DRIVE VOLTAGE $V_X$ OF SOLENOID $SOL_X$ IS FETCHED AS DRIVE VOLTAGE $V_{SOLXY}$

—⊙— : FETCHED DRIVE VOLTAGE $V_{SOLXY}$ IS SET AS DRIVE VOLTAGE $V_{SOLX}$ USED IN ABNORMALITY JUDGMENT

VOLTAGE

$V_{REF}$

$V_{SOL12}$

$\Delta V_L$

DRIVE VOLTAGE $V_X$ (EXCLUDING DRIVE VOLTAGE $V_2$)

DRIVE VOLTAGE $V_2$ (BECAUSE THERE IS AN OPEN FAILURE AT SOLENOID $SOL_2$)

t

EP 0 803 415 A2

# F I G. 7

CASE IN WHICH THE SOLENOID $SOL_3$ CHANGES FROM AN ON STATE TO AN OFF STATE (SOLENOIDS OTHER THAN $SOL_3$ ARE ALL IN AN OFF STATE, AND THERE IS AN OPEN FAILURE AT SOLENOID $SOL_2$)

$\xrightarrow{X}$ : DRIVE VOLTAGE $V_X$ OF SOLENOID $SOL_X$ IS FETCHED AS DRIVE VOLTAGE $V_{SOLXY}$

$\xrightarrow{X}$ : FETCHED DRIVE VOLTAGE $V_{SOLXY}$ IS SET AS DRIVE VOLTAGE $V_{SOLX}$ USED IN ABNORMALITY JUDGMENT

DRIVE VOLTAGES $V_1$, $V_4$ THROUGH $V_6$ (SOLENOID $SOL_3$ IN ON STATE)

DRIVE VOLTAGES $V_1$, $V_3$ THROUGH $V_6$ (SOLENOID $SOL_3$ IN OFF STATE)

VOLTAGE

$V_{REF}$

$\Delta V_L$

DRIVE VOLTAGE $V_3$ (SOLENOID $SOL_3$ IN ON STATE)

DRIVE VOLTAGE $V_2$ (BECAUSE THERE IS AN OPEN FAILURE AT SOLENOID $SOL_2$)

t

SOLENOID $SOL_3$ CHANGES FROM ON STATE TO OFF STATE

EP 0 803 415 A2

# F I G. 8

EP 0 803 415 A2

[ CASE IN WHICH, IN CONVENTIONAL ABNORMALITY
DETECTING DEVICE, SOLENOIDS 1 THROUGH 6 ARE ALL OFF
AND THE BATTERY VOLTAGE CHANGES → SOLENOID 6 IS
MISTAKENLY JUDGED TO BE IN AN ABNORMAL STATE ]

$\overset{X}{\bullet}$ : DRIVE VOLTAGE $V_{SOLX}$ OF SOLENOID $X$
IS FETCHED

VOLTAGE

$V_{REF}$

$\Delta V_L$

DRIVE VOLTAGE $V_{SOLX}$
(GRADUALLY DECREASES
DUE TO CHANGE IN
BATTERY VOLTAGE)

t

# F I G. 9

CASE IN WHICH, IN CONVENTIONAL ABNORMALITY
DETECTING DEVICE, SOLENOID 3 CHANGES FROM ON STATE
TO OFF STATE (SOLENOIDS OTHER THAN SOLENOID 3 ARE
ALL IN AN OFF STATE) → SOLENOIDS 1, 2 ARE MISTAKENLY
JUDGED TO BE IN ABNORMAL STATES

DRIVE VOLTAGES $V_{SOL1-6}$
(SOLENOID 3 IS OFF)

DRIVE VOLTAGES $V_{SOL1, 2, 4-6}$
(SOLENOID 3 IS ON)

VOLTAGE

4   5   6

$V_{REF}$

$\Delta V_L$

1   2

DRIVE VOLTAGE $V_{SOL3}$
(SOLENOID 3 IS ON)

3

t

SOLENOID 3 CHANGES FROM
ON STATE TO OFF STATE

$\frac{X}{\bullet}$ : DRIVE VOLTAGE $V_{SOLX}$ OF
SOLENOID X IS FETCHED

EP 0 803 415 A2

# F I G. 1 0

[ CASE IN WHICH, IN CONVENTIONAL ABNORMALITY
DETECTING DEVICE, SOLENOID 3 CHANGES FROM ON STATE
TO OFF STATE (SOLENOIDS OTHER THAN SOLENOID 3 ARE
ALL IN OFF STATES) → SOLENOIDS 1, 2 ARE MISTAKENLY
JUDGED TO BE IN ABNORMAL STATES ]

DRIVE VOLTAGE $V_{SOL1-6}$
(SOLENOID 3 IS OFF)

VOLTAGE

**4 5 6**

$V_{REF}$ (AVERAGE VALUE WITH PREVIOUS TIME)

$\Delta V_L$

**1 2  4 5 6**  **1 2**

DRIVE VOLTAGES $V_{SOL1,2,4-6}$
(SOLENOID 3 IS ON)

DRIVE VOLTAGE $V_{SOL3}$
(SOLENOID 3 IS ON)

**3**  **3**

PREVIOUS TIME    THIS TIME    t

SOLENOID 3 CHANGES FROM
ON STATE TO OFF STATE

$\overset{X}{\bullet\!-\!\bullet}$ : DRIVE VOLTAGE $V_{SOLX}$ OF
SOLENOID X IS FETCHED

CASE IN WHICH, IN CONVENTIONAL ABNORMALITY
DETECTING DEVICE, SOLENOID 3 CHANGES FROM ON STATE
TO OFF STATE (SOLENOIDS OTHER THAN SOLENOID 3 ARE
IN AN OFF STATE AND THERE IS AN OPEN FAILURE AT
SOLENOID 2) → SOLENOID 1 IS MISTAKENLY JUDGED AS
BEING IN AN ABNORMAL STATE

DRIVE VOLTAGE $V_{SOL1,3-6}$
(SOLENOID 3 IS OFF)

VOLTAGE

$V_{REF}$

$\Delta V_L$ $V_{subx}(x=1)$

DRIVE VOLTAGE $V_{SOL1,4-6}$
(SOLENOID 3 IS ON)
DRIVE VOLTAGE $V_{SOL3}$
(SOLENOID 3 IS ON)

DRIVE VOLTAGE $V_{SOL2}$
(BECAUSE THERE IS A OPEN FAILURE
AT SOLENOID 2)

PREVIOUS TIME    THIS TIME    t

$\frac{X}{\bullet}$ : DRIVE VOLTAGE $V_{SOLX}$ OF
SOLENOID X IS FETCHED

EP 0 803 415 A2

# F I G. 1 2

EP 0 803 415 A2

[ CASE IN WHICH, IN CONVENTIONAL ABNORMALITY
DETECTING DEVICE, SOLENOIDS 1 THROUGH 6 ARE ALL OFF
(THERE IS AN OPEN FAILURE AT SOLENOID 2) AND THE
BATTERY VOLTAGE CHANGES → SOLENOIDS 5, 6 ARE
MISTAKENLY JUDGED TO BE IN ABNORMAL STATES OR
ABNORMALITY OF SOLENOID 2 CANNOT BE DETECTED ]

VOLTAGE

$V_{subx}(x=1)$

$V_{REF}$

$\Delta V_L$

DRIVE VOLTAGE $V_{SOLX}$
(OTHER THAN $V_{SOL2}$,
GRADUALLY DECREASING
DUE TO CHANGE IN
BATTERY VOLTAGE)

DRIVE VOLTAGE $V_{SOL2}$
(BECAUSE THERE IS AN
OPEN FAILURE AT
SOLENOID 2)

PREVIOUS TIME          THIS TIME          $t$

$\dfrac{x}{\bullet}$ : DRIVE VOLTAGE $V_{SOLX}$ OF
SOLENOID X IS FETCHED